# EUROPEAN PATENT APPLICATION

(11) **EP 3 412 927 A1**
(43) Date of publication of application: **12.12.2018**
(21) Application number: 17746750.3
(22) Date of filing: 16.01.2017
(51) Int. Cl.: F16F 9/14, A47K 13/12, F16C 11/04

(54) **ROTARY DAMPER THAT SELF-RECOVERS AGAINST DAMPING EFFECT REDUCTION**

(30) Priority: 02.02.2016 CN 201610073233
(71) Applicant: Wang, Xiangji, Xiamen, Fujian 361028 (CN)
(72) Inventor: CHEN, Wencheng, Xiamen Fujian 361028 (CN); WANG, Xiangji, Xiamen Fujian 361028 (CN)
(74) Representative: Gong, Jinping
(86) International application number: PCT/CN2017/071225
(87) International publication number: WO 2017/133430

(57) **Abstract**

A rotary damper with self-repairing against attenuation, comprising a housing, a rotating shaft, and blades. The blades connect with the rotating shaft and comprise a driving structure. When the rotating shaft rotates towards a direction of forming damping, the driving force is applied on the drive structure by the damping oil. The blade is driven by the drive structure and elastically deforms the blades and extends outwardly to tightly attach to an inner wall of the housing. When the damping is formed, a downward pulling force is applied on the blades by the damping oil, and the blade drives the rotating shaft downward to tightly attach the bottom of the housing to generate a self-locking force. Furthermore, the damping oil flowing through the rotating shaft and the bottom of the housing can be reduced, to achieve a more stable damping effect.

## Description

### TECHNICAL FIELD

**.** The present invention relates to a rotary damper, more particularly to a rotary damper with self-repairing against attenuation.

### BACKGROUND ART

**.** In the present technology, after a rotary damper has been used a certain number of times, the oil passage becomes larger and the soft closing period shorter with the wearing of accessories.

**.** The Chinese utility model patent application No. 201220364330.5 discloses a rotary damper comprising a housing with an opening on one end and a rotating shaft. A shaft core is formed on the bottom of the rotating shaft and is inserted into the housing through the opening. The shaft core rotatably connects with the housing. A pair of counterpositions is formed on the inner wall of the housing. A pair of blades protrudes from the shaft core. The pair of blades of the shaft core respectively buckles with a fastener. The fastener is located between the pair of counterpositions of the housing. The outer wall of the fastener can slide against the inner wall of the housing, so that an accommodation area for accommodating the damping oil is formed by the counterpositions of the housing, the shaft core of the blade and the fastener, and a one-directional oil valve is formed by the fastener and the shaft core of the blade. A sealing assembly locates on the opening of the housing.

**.** In the above utility model, the outer wall and lower end surface of the fastener should be tightly attached to the inner wall of the housing, so that the damping therebetween can be formed. However, after much use, the oil passage would become larger and the oil passing speed would become faster because of the abrasion of the outer wall and the lower end surface of the fastener, thereby weakening the damping effect.

### SUMMARY

**.** The present disclosure provides a self-repairing rotary damper with a long service life and capable of avoiding damping effect attenuation due to wear and tear.

**.** An embodiment of the present disclosure includes a rotary damper capable of self-repairing against attenuation, comprising a housing, a rotating shaft, and blades connecting with the rotating shaft. The blades comprise a driving structure. When the rotating shaft rotates towards a direction of damping formation, the driving structure of the blade increases a running resistance so as to increase a force applied to the blade and to cause the blade to elastically deform and extend outwardly to tightly attach to the inner wall of the housing.

**.** The driving structure increases the resistance area of the blade and the resistance of the damping oil to deform the blade.

**.** In some embodiments, the driving structure is a baffle protruding from the surface of the blade capable of pushing damping oil to form a force which causes the blade to elastically deform.

**.** In some embodiments, the baffle is located on at least one edge of the outer edge, the lower edge, and the upper edge of the blade.

**.** In some embodiments, the blades surround the rotating shaft to form an inclined helical structure in the axial direction.

**.** In some embodiments, when the rotating shaft rotates towards the direction of damping formation, a downward pulling force is applied on the inclined helical structure by the damping oil to drive the rotating shaft downward to tightly attach to the bottom of the housing.

**.** In some embodiments, a spiral connecting ridge matched with the blade is located on the outer wall of the rotating shaft, and the spiral connecting ridge synchronously forms linkages with the blade.

**.** In some embodiments, an oil passage is located the inner wall of the blades along a length direction of the blades, and the blades are positioned by the oil groove and the spiral connecting ridge of the rotating shaft, the spiral connecting ridge includes an oil drain port. The blade includes an oil sealing plate for sealing the oil drain port. The blades match with the rotating shaft to form a one-directional damping mechanism, the rotating shaft rotates towards a direction of damping formation, and a pressure is applied to the oil sealing plate to seal the oil drain port, thus the damping can be formed; the rotating shaft rotates towards a reverse direction of the oil sealing plate to separate the oil sealing plate from the oil drain port.

**.** In some embodiments, one side of the oil sealing plate is connected to the blade and the other sides of the oil sealing plate are open.

**.** In some embodiments, a side of the blade opposite to the oil sealing plate comprises an oil passing hole, and the damping oil successively flows through the oil drain port, the oil passage, and the oil passing hole and then to the other side of the blades.

**.** In some embodiments, the housing comprises at least one protruding stopper extending from the inner wall of the housing, and an end of the at least one protruding stopper closely matches with the rotating shaft; the rotating shaft comprises an oil passage located on an outer wall of the rotating shaft and downward along the rotating direction, and when the rotating shaft rotates, the end of the at least one protruding stopper moves to the oil passage, and the damping oil flows through the oil passage.

**.** The benefits of the present disclosure include self-repairing against attenuation, resistance formed between the driving structure and the damping oil, and a downward pulling force applied on the blades by the damping oil.

**.** The rotary damper with self-repairing against attenuation, according to the present disclosure, causes the blades of the damper to elastically deform by resistance of the damping oil, thus the outer surface and the edges of the blade are closely contacting the inner wall of the housing. When the outer surface and the edges of the blade are worn out, during the process of damping formation, a resistance can be formed between the driving structure and the damping oil, so as to form a force applied to the driving structure and to cause the blade to elastically deform and extend outwardly to tightly attach to the inner wall of the housing.

**.** When the outer wall and edges of the blade are worn out, during the process of damping formation, a resistance can be formed between the driving structure and the damping oil, so as to form a force applied to the driving structure and to cause the blade to elastically deform and extend outwardly to tightly attach to the inner wall of the housing. The present disclosure can self-repair the problem of damping attenuation caused by the oversize oil passage, and can prolong the service life of the rotary damper.

**.** The blades and the connecting ridges of the present disclosure can be spiral structures. When the damping is formed, a downward pulling force is applied on the blades by the damping oil, and the blade drives the rotating shaft downward to tightly attach the bottom of the housing to generate a self-locking force. Furthermore, the damping oil flowing through the rotating shaft and the bottom of the housing can be reduced, thus, to achieve a more stable damping effect.

### BRIEF DESCRIPTION OF THE DRAWINGS

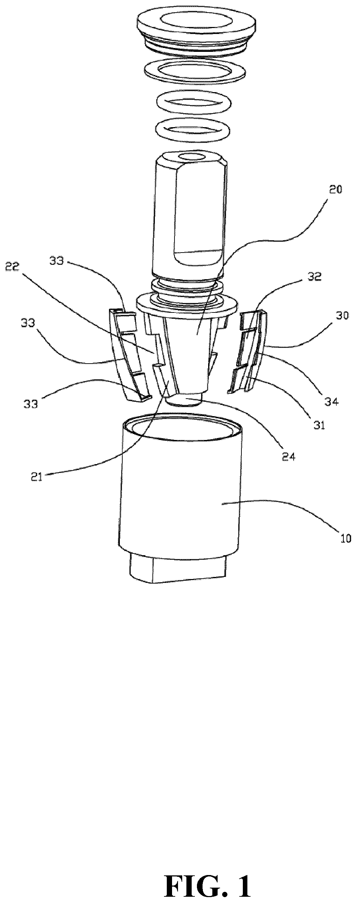

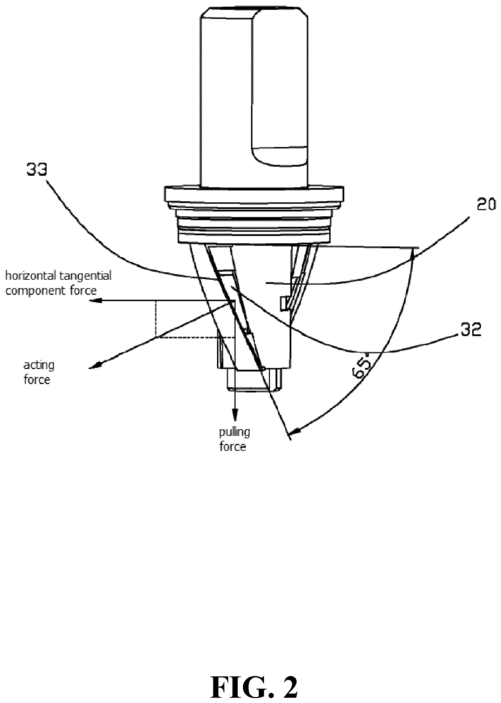

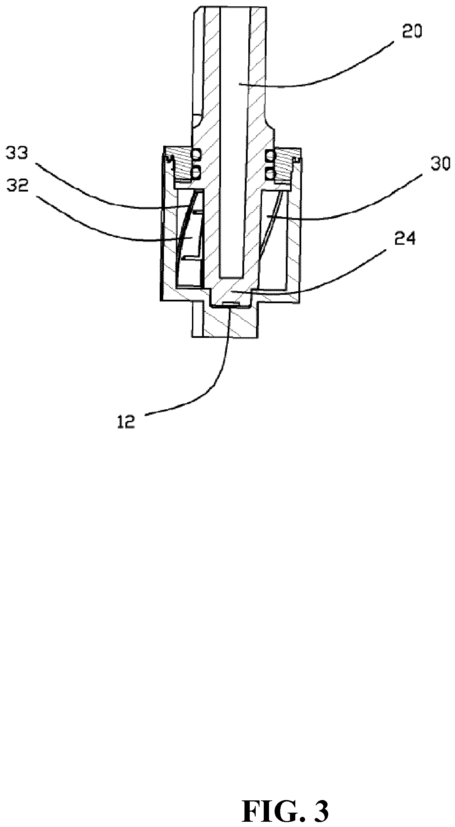

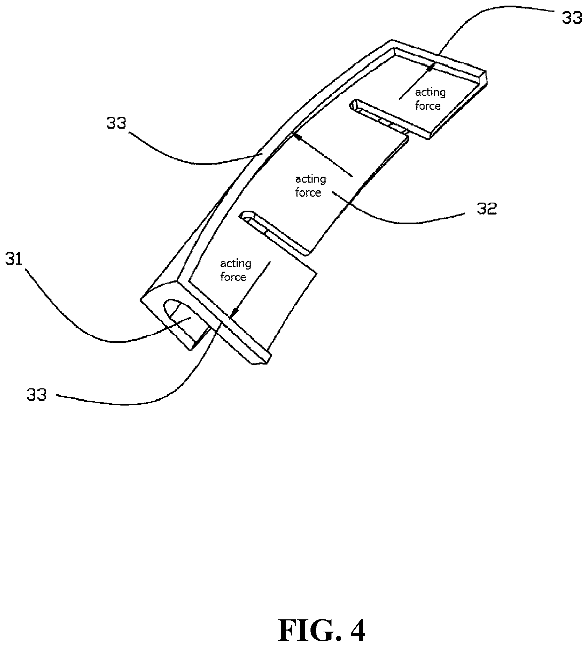

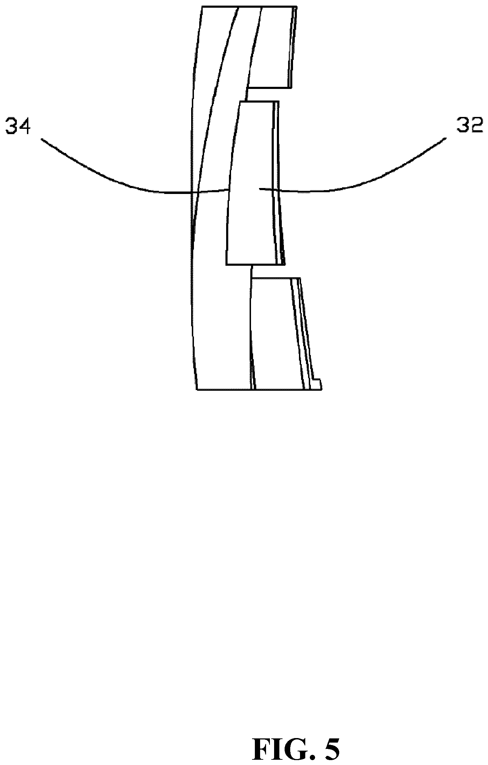

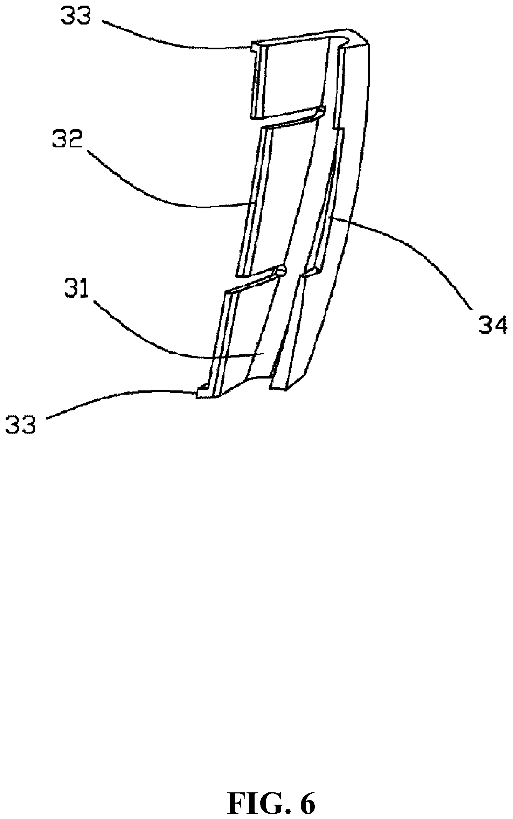

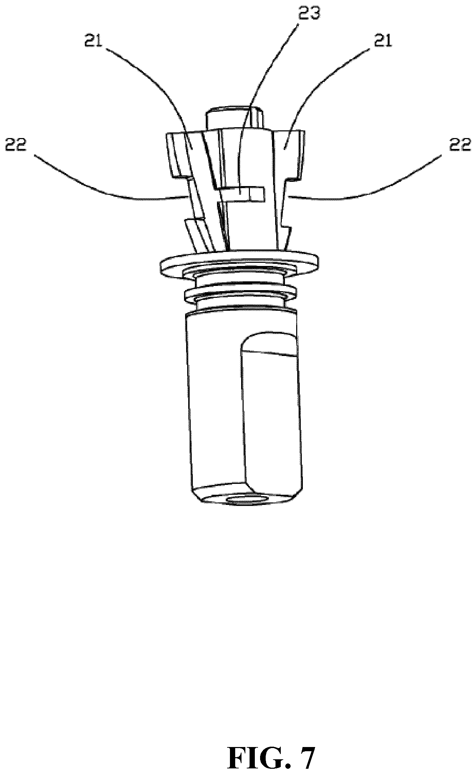

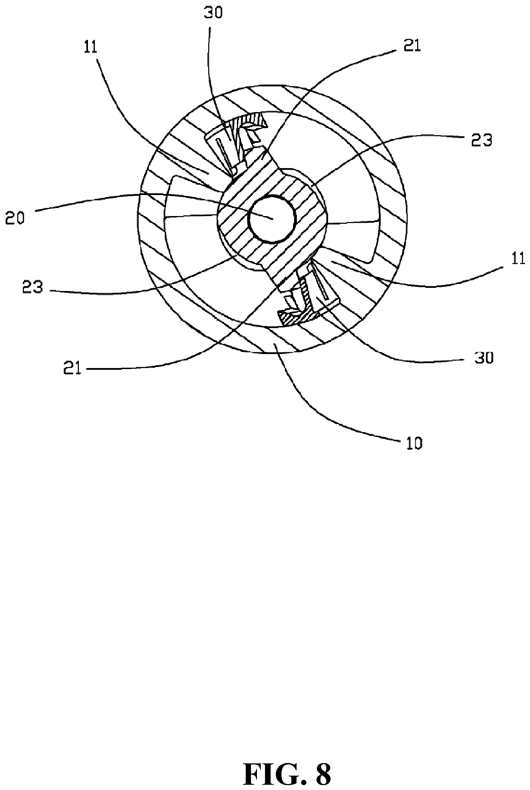

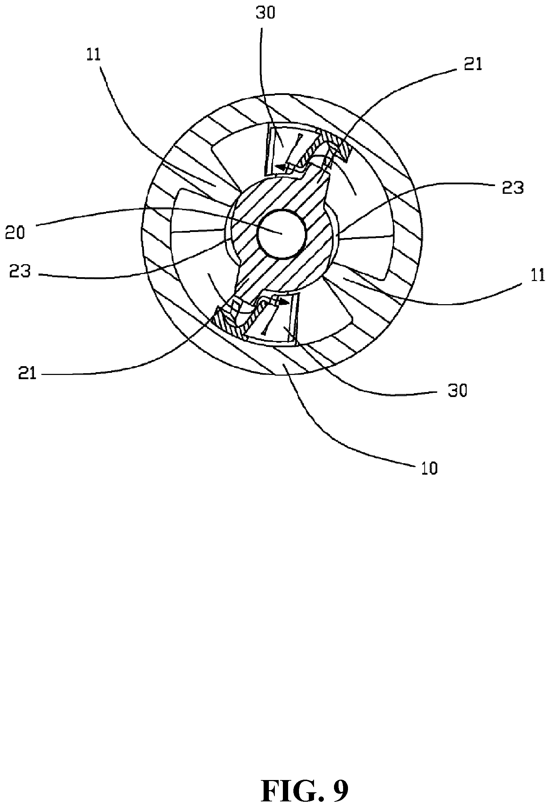

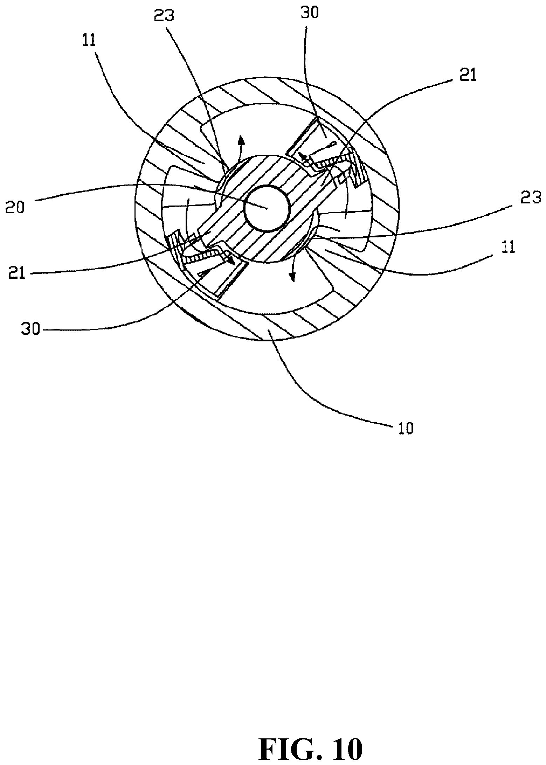

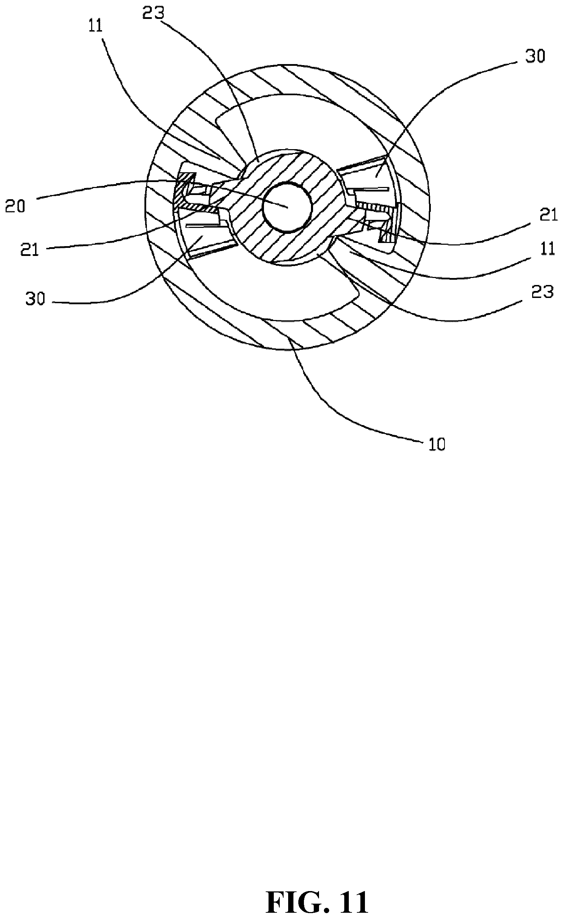

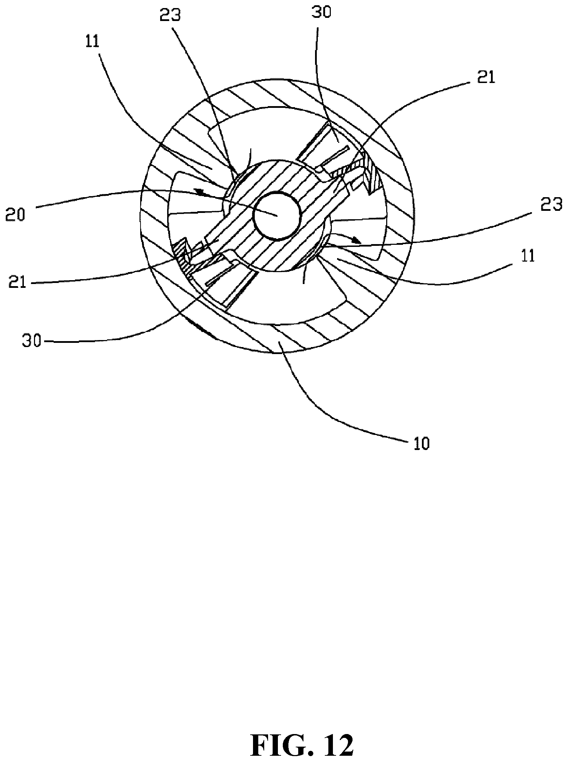

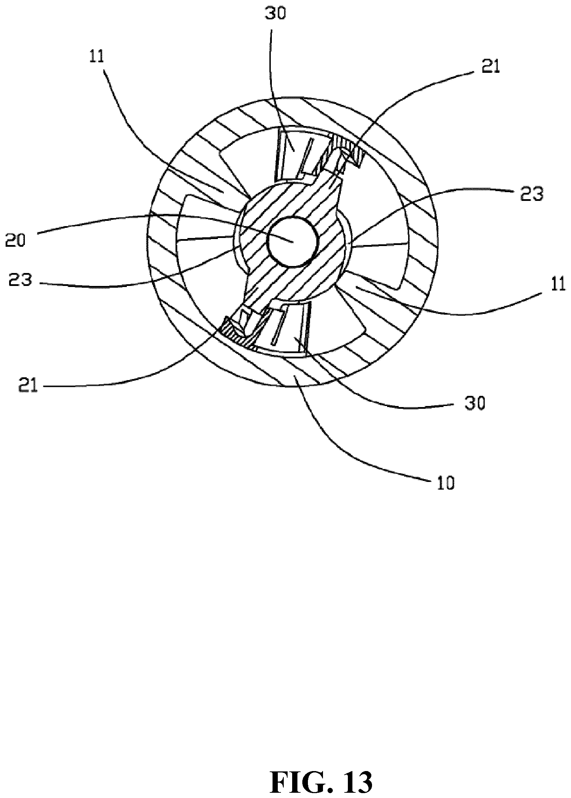

**.** Fig. 1 is an exploded view of the structure of an embodiment of the present disclosure.
**.** Fig. 2 is a schematic structural view of an embodiment of the present disclosure shown without the housing.
**.** Fig. 3 is a sectional view of the structure of an embodiment of the present disclosure.
**.** Fig. 4 is a schematic view of a blade.
**.** Fig.5 is a side view of the blade.
**.** Fig. 6 is a schematic view of the blade.
**.** Fig. 7 is a schematic view of a rotating shaft.
**.** Fig. 8 is a schematic view of the state of the damper according to one embodiment when the toilet cover is closed.
**.** Fig. 9 is a schematic sectional view of the damper according to one embodiment of the toilet cover opening process.
**.** Fig. 10 is schematic sectional view of the damper in the embodiment of a top cover opening process.
**.** Fig. 11 is a schematic view of the state of the damper when the cover is opened in an embodiment.
**.** Fig. 12 is a schematic sectional view of the damper in the embodiment of a cover closing process.
**.** Fig. 13 is a schematic sectional view of the damper in an embodiment of the cover closing process.

### DETAILED DESCRIPTION

**.** The present disclosure will be described in details by referring to accompanying figures and embodiments as following:

**.** Aspects of the present disclosure include a rotary damper with self-repairing against attenuation characteristics, and a self-locking force, which can be formed when the rotary damper moves to a certain angle along a damping direction, as to compensate the greater gap caused by abrasion and to improve the stability of the soft close period.

**.** As shown in Figs.1 through 4, an embodiment of a damper comprises a housing 10, a rotating shaft 20, and a plurality of blades 30 connected with the rotating shaft 20. The blades 30 comprise a driving structure. When the rotating shaft 20 rotates towards a direction of damping formation, a driving force is applied on the drive structure by the damping oil, the blade 30 is driven by the drive structure, and the outer wall of the blade 30 is tightly attached to an inner wall of the housing 10. Thus, the gaps between the blade 30 and the housing 10 can be sufficiently small, and the damping oil can flow slowly through the gaps. The driving force of the damping oil on the driving structure comes from the resistance applied by the damping oil to the driving structure. When the driving structure overcomes the resistance of the damping oil and moves, the damping oil generates a relative force to the driving structure. The force produces component forces in different directions according to the bearing surface of the driving structure, which further causes the blades 30 to form a movement tendency or a deformation tendency along the direction of the component force, so that the outer wall of the blade 30 can closely contact the inner wall of the housing 10.

**.** In one embodiment, the blade 30 can elastically deform and extend outwardly to tightly attach to the inner wall of the housing 10 by the driving of the drive structure. The blade 30 is made of elastic materials, such as plastic, rubber, etc., so that when a force from the damping oil is applied to the drive structure, a certain degree of elastic deformation can occur.

**.** The drive structure is used to interact with the damping oil to generate an acting force. Therefore, the driving structure needs to have a structure which can bear the resistance toward the outside of the blade 30. In the present embodiment, the driving structure is a baffle plate 33 protruding upward from the surface of the blade 30. The baffle plate 33 can push the damping oil, in turn, forming an acting force which can cause the blade 30 to elastically deform. In this embodiment, the baffle 33 is a thin edge located around the periphery of the blade 30. When a pressure is applied to the baffle 33 by the damping oil, a force expanding outward will be formed. The edge of the blade 30 can be tightly attached to the inner wall of the housing because of the elastic deformation of the blade 30, thus the damping attenuation caused by the abrasion of the blade 30 and the housing 10 during continuous movement can be compensated. The torque of the acting force can be as large as possible in order to obtain a greater acting force and sufficient elastic deformation of the blade 30. The baffle 33 is located on the surface of the blade 30 along the outer edge of the blade 30. That is, the baffle 33 can be at an outermost edge of the blade 30 to maximize the torque of the acting force.

**.** Because the lower end of the blade 30 is closely attached to the bottom surface of the housing 10, if the rotary damper comprises a cover without rotating around the rotating shaft 20, the cover would tightly attach to the upper end of the blade 30. Thus, the upper end or the lower end of the blade 30 would also be worn out, resulting in the oil passage between the blade 30 and the housing 10 or the cover plate becoming greater and greater. Therefore, in order to reduce the damping attenuation, the baffle 33 can be further disposed along the lower edge and/or upper edge of the blade 30.

**.** As shown in Fig. 4, in order to enlarge the contact area between the blade 30 and the damping oil to obtain a greater acting force, the blades surround the rotating shaft to form an inclined helical structure in the axial direction. The helical structure has a longer length than that of the straight structure under the same height. Thus, the blade 30 can have a greater surface and a longer baffle 33 which can interact with the damping oil to generate an acting force.

**.** As shown in FIG. 2 and FIG. 3, when the helical blade 30 is damped, the damping oil produces a downward pulling force on the helical blade 30. The blade 30 drives the rotating shaft 20 downward to tightly attach to the bottom of the housing 10 to form the damping. This will further reduce the damping oil flowing through the rotating shaft 20 and the bottom of the housing 10, and affect the damping effect. In order to achieve an optimal balance between the maximum deformation tendency of the blade 30 and the maximum downward pulling force applied on the blade 30 by the damping oil, in this embodiment, an inclination angle of the blade 30 and the horizontal plane is about 65 degrees.

**.** As shown in Figs. 3 through 7, an oil groove 31 is located at the inner wall of the blades 30. The outer wall of the shaft 20 comprises a spiral connecting ridge 21 matched with the blade 30. The spiral connecting ridge 21 synchronously links with the blade 30. The rotating shaft 20 comprises a clamping part 24 located at a bottom of the housing 10. The bottom of the housing 10 comprises a sinking clamping hole 12 corresponding to the clamping part 24. The rotating shaft 20 is installed in the housing 10, and the clamping part 24 is embedded in the clamping hole 12. Positioning is performed by the spiral connecting ridge 21 of the rotation shaft 20 and the oil groove 31.

**.** The spiral connecting ridge 21 comprises an oil drain port 22. The blade 30 comprises an oil sealing plate 32 for sealing the oil drain port 22. The rotating shaft 20 rotates towards a direction of forming the damping, and the oil sealing plate 32 undergoes the pressure of the damping oil to cover the oil drain port 22, of which only very little damping oil can pass through the oil drain port 22. The rotating shaft rotates 20 towards a reverse direction of the damping formation, the oil sealing plate 32 separates from the oil drain port 22 to open the oil drain port 22, and the damping oil flows from the oil drain port 22 through the oil groove 31 to the other side of the blade 30. In order to reduce the oil passing resistance, the blade 30 further comprises an oil port 34 located on a side opposite to the oil sealing plate 32. When the damping oil need to pass quickly, the damping oil can flow quickly through the oil drain port 22, the oil groove 31, and the oil port 34 in sequence to the other side of the blade.

**.** One side of the oil sealing plate 32 is connected to the blade 30, and the other sides are free ends and not connected to the blades. When the rotating shaft 20 rotates, the oil sealing plate 32 with only one side connected to the blade 30 is more likely to have a fixed swing under the pressure of the damping oil.

**.** Characteristics of the rotary damper of the present disclosure can be applied to a device having an open state and a close state, such as a toilet cover. When the toilet cover is opened, the oil can pass faster in the damper and the toilet cover can be opened with less effort. When the toilet cover is closed, the oil can pass slowly in the damper to obtain a damping effect, thus the toilet cover can fall slowly. Correspondingly, the blade 30 cooperates with the rotating shaft 20 to form a one-direction damping mechanism, and the rotating shaft 20 rotates towards the direction of the oil sealing plate 32 to cause the oil sealing plate 32 to cover the oil drain port 22. Thus, the oil can pass slowly to form the damping. When the rotating shaft 20 rotates towards a reverse direction of the oil sealing plate 32, the oil drain port 22 is opened and the oil passes quickly without forming any damping.

**.** In order to make the oil pass more quickly during rotation towards the reverse direction of the damping formation, an oil port 34 is further formed on one side surface of the blade 30 opposite to the oil sealing plate 32. When the damping oil needs to pass quickly, the damping oil can flow quickly through the oil drain port 22, the oil groove 31, and the oil port 34 in sequence to the other side of the blade without any resistance.

**.** The inner wall of the housing10 further comprises at least one protruding stopper 11 extending from the inner wall of the housing 10. When the rotating shaft 20 rotates to cause resistance of the blade 30 by the stopper 11, the rotating shaft 20 stops rotating. That is, the stopper 11 defines a start position and a stop position of the rotation path of the rotating shaft 20. The stopper 11 can comprises one stopper or two stoppers. When the stopper 11 comprises two asymmetric stoppers, the smaller distance between the two asymmetric stoppers 11 can be defined as the rotation path of the rotating shaft 20.The end of the stopper11 closely matches with the rotating shaft 20 to limit the damping oil flow quickly through gap between the rotating shaft 20 and the stopper 11. The rotating shaft 20 further comprises an oil passage 23 located on the outer wall downward along the rotating direction. When the rotating shaft 20 rotates to make the end of the stopper 11 move to the oil passage 23, the damping oil would flow through the oil passage 23 quickly.

**.** Figs. 8 through 13 show aspect of the present disclosure applied to the toilet cover, which has an opening state and a closing state.

**.** As shown in Fig. 8, when the toilet over is closed, the side of the blade 30 with the oil sealing plate 32 thereon resists with the stopper 11 in the damper.

**.** As shown in Fig. 9, during the toilet cover's first half opening process, the rotating shaft 20 rotates clockwise, and the resistance of the damping oil is applied to the blade 30 to separate the oil drain port 22 from the oil sealing plate 32 and open the oil drain port 22. Thus a large passage can be formed, and the damping oil can be rapidly exchanged on both sides of the blade 30. Therefore, the toilet cover can be opened easily.

**.** As shown in Fig. 10, during the toilet cover's last half opening process, the rotating shaft 20 rotates clockwise to keep the oil drain port open. When the oil passage 23 of the rotating shaft 20 rotates to the stopper 11, the exchange passage of the damping oil can be increased, and the turnover resistance of the damper can be further reduced. Thus, the toilet cover can be opened more easily until the toilet cover is fully opened. As shown in Fig. 11, the side of the blade 30 opposite to the oil sealing plate 32 resists with the stopper 11 in the damper.

**.** As shown in Fig. 12, during the toilet cover's first half closing process, the rotating shaft 20 rotates counter-clockwise, and the stopper 11 moves to the oil passage 23 of the rotating shaft 20. The damping oil can flow quickly through the oil passage 23 to make the toilet cover fall quickly.

**.** As shown in Fig. 13, during the toilet cover's last half closing process, the rotating shaft 20 continues to rotate counter-clockwise, the stopper 11 separates away from the oil passage 23 of the rotating shaft 20, and the oil sealing plate 32 tightly covers on the oil drain port 22 under the resistance of the damping oil. The damping oil slowly exchanges between the two sides of the blade 30 to produce damping and a slow falling effect until the toilet cover is completely closed, as shown in Fig.8.

**.** During this process, the blade 30 is subjected to a damping oil pressure (acting force) and acts on the rotating shaft 20 to generate one horizontal tangential component force and one downward pulling component force, as shown in Fig. 2.

**.** The foregoing description of the embodiments of the present disclosure is intended to illustrate and not limit the embodiments. According to the technical essence of the present disclosure, changes, modifications, and the like of the above embodiments will fall within the scope of the claims of the present disclosure.

### . Industrial applicability

**.** The blade of the present disclosure is elastically deformed under the driving action of the drive structure and extends outwardly, and the outer wall of the blade is tightly attached to the inner wall of the housing. When the outer wall of the blade and end surfaces of the blade are worn out, the present disclosure can self-repair the problem of the damping attenuation caused by the large oil passing gap brought by being worn out, thereby prolonging the life of the damper.

## Claims

1. A rotary damper comprising a housing, a rotating shaft, and a plurality of blades; **characterized in that** the blades are connected with the rotating shaft; the blades each comprises a driving structure; when the rotating shaft rotates towards a direction of damping formation, the driving structure of the blades increases a running resistance so as to increase a force applied to the blades and to cause the blades to elastically deform and extend outwardly.

2. The rotary damper according to claim 1, **characterized in that** the driving structure is a baffle protruding from the surface of the blade capable of pushing damping oil to form a force which causes the blade to elastic deform.

3. The rotary damper according to claim 2, **characterized in that** the baffle is located on at least one edge of an outer edge, a lower edge, and an upper edge of the blades.

4. The rotary damper according to claims 1-3, **characterized in that** the blades surround the rotating shaft to form an inclined helical structure in the axial direction.

5. The rotary damper according to claim 4, **characterized in that** when the rotating shaft rotates towards the direction of damping formation, a downward pulling force is applied on the inclined helical structure by the damping oil to drive the rotating shaft to tightly attach to a bottom of the housing.

6. The rotary damper according to claim 4, **characterized in that** a spiral connecting ridge matching the blades is located on an outer wall of the rotating shaft, and the spiral connecting ridge synchronously links with the blades.

7. The rotary damper according to claim 6, **characterized in that** an oil groove is located at an inner wall of the blades along a length direction of the blades, and the blades are positioned by an oil passage and the spiral connecting ridge of the rotating shaft, the spiral connecting ridge includes an oil drain port; the blade includes an oil sealing plate for sealing the oil drain port; the blades matches with the rotating shaft to form a one-directional damping mechanism, the rotating shaft rotates towards a direction of damping formation, and a pressure is applied to the oil sealing plate to seal the oil drain port, thus the damping can be formed; the rotating shaft rotates towards a reverse direction of the oil sealing plate to separate the oil sealing plate from the oil drain port.

8. The rotary damper according to claim 7, **characterized in that** one side of the oil sealing plate is connected to the blade and the other sides of the oil sealing plate are open.

9. The rotary damper according to claim 8, **characterized in that** a side of the blade opposite to the oil sealing plate comprises an oil passing hole, and the damping oil successively flows through the oil drain port, the oil passage, the oil passing hole, and then to the other side of the blades.

10. The rotary damper according to claim 1, **characterized in that** the housing comprises at least one protruding stopper extending from the inner wall of the housing; an end of the at least one protruding stopper closely matches with the rotating shaft; the rotating shaft comprises an oil passage located on an outer wall of the rotating shaft and downward along the rotating direction; when the rotating shaft rotates, the end of the at least one protruding stopper moves to the oil passage, and the damping oil flows through the oil passage.
